# EUROPEAN PATENT APPLICATION

(11) **EP 3 200 535 A1**
(43) Date of publication of application: **02.08.2017**
(21) Application number: 15845363.9
(22) Date of filing: 25.09.2015
(51) Int. Cl.: H04W 72/04, H04W 16/32, H04W 52/30

(54) **USER TERMINAL, WIRELESS COMMUNICATION SYSTEM, AND WIRELESS COMMUNICATION METHOD**

(30) Priority: 25.09.2014 JP 2014195694
(71) Applicant: NTT DOCOMO, INC., Chiyoda-ku Tokyo 100-6150 (JP)
(72) Inventor: TAKEDA, Kazuki, Tokyo 100-6150 (JP); UCHINO, Tooru, Tokyo 100-6150 (JP); TESHIMA, Kunihiko, Tokyo 100-6150 (JP); NAGATA, Satoshi, Tokyo 100-6150 (JP)
(74) Representative: Hoffmann Eitle
(86) International application number: PCT/JP2015/077044
(87) International publication number: WO 2016/047728

(57) **Abstract**

The present invention is directed to dual connectivity, in which a control for synchronous dual connectivity and a control for asynchronous dual connectivity are appropriately applied. In a user terminal which communicates with a plurality of cell groups, respectively including one or more cells which utilize different frequencies, based on an indicator that indicates when an event occurs in the higher layer, if the indicator changes in a state where either of the control for synchronous dual connectivity and the control for asynchronous dual connectivity is being operated, the user terminal either performs a control that does not allow the switching to another dual connectivity control, or performs a control that switches to another dual connectivity control only a predetermined number of times.

## Description

### Technical Field

The present invention relates to a user terminal, a radio communication system and a radio communication method in a next-generation mobile communication system.

### Background Art

In a UMTS (Universal Mobile Telecommunications System) network, long-term evolution (LTE) has been standardized for the purposes of further increasing high-speed data rates and providing low delay, etc. (non-patent literature 1).

In LTE, as multiple access schemes, a scheme that is based on OFDMA (Orthogonal Frequency Division Multiple Access) is used for downlink channels (downlink), and a scheme that is based on SC-FDMA (Single Carrier Frequency Division Multiple Access) is used for uplink channels (uplink).

For the purposes of achieving further broadbandization and higher speed, successor systems to LTE have also been considered, which are called, for example, LTE advanced or LTE enhancement, and specified in LTE Rel. 10/11.

The system band of an LTE Rel. 10/11 system includes at least one component carrier (CC), where the system band of the LTE system is one unit. Achieving broadbandization by gathering a plurality of component carriers in this manner is referred to as "carrier aggregation" (CA).

In LTE Rel. 12, which is a further successor system to LTE, various scenarios have been considered in which a plurality of cells that belong to different frequency bands (carriers) are used. In the case where the radio base stations formed by the plurality of cells are practically the same, it is possible to apply the above-mentioned carrier aggregation. Whereas, in the case where the radio base stations formed by the plurality of cells are completely different, it is conceivable to apply dual connectivity (DC).

### Citation List

### Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN): Overall description; Stage 2".

### Summary of Invention

### Technical Problem

In regard to dual connectivity, different manners of control exist for synchronous dual connectivity and for asynchronous dual connectivity. In the case where the user terminal determines which control to apply between a control for synchronous dual connectivity and a control for asynchronous dual connectivity, it is assumed that the user terminal determines whether or not a difference in timing between cell groups satisfies a predetermined condition. However, in such a case, if, for example, a timing-advance control via a base station or a timing-adjustment control in the terminal itself is carried out, a user terminal that exists at a boundary of such a predetermined condition can sometimes fluctuate between either side of the predetermined condition of the difference in timing between cell groups. In such a case, a problem may possibly occur with the user terminal in which the two types of controls "ping-pong" back and forth very frequently due to the fluctuation in the timing differences.

The present invention has been devised in view of the above discussion, and it is therefore an object of the present invention to provide a user terminal, a radio communication system and a radio communication method, which, in regard to dual connectivity, can appropriately apply a control for synchronous dual connectivity and a control for asynchronous dual connectivity.

### Solution to Problem

According to the user terminal of the present invention, the user terminal communicates with a plurality of cell groups, respectively including one or more cells which utilize different frequencies, the user terminal including a control section, wherein, based on an indicator that indicates when an event occurs in a higher layer, if the indicator changes in a state where either of a control for synchronous dual connectivity and a control for asynchronous dual connectivity is being applied. The control section performs one of: a control that does not allow the switching to another dual connectivity control, and a control that switches to another dual connectivity control only a predetermined number of times.

### Advantageous Effects of Invention

According to the present invention, it is possible to appropriately apply, in regard to dual connectivity, a control for synchronous dual connectivity and a control for asynchronous dual connectivity.

### Brief Description of Drawings

FIG. 1 shows diagrams indicating carrier aggregation and dual connectivity communication between radio communication base stations and a user terminal.
FIG. 2 shows explanatory diagrams of a transmission power control for dual connectivity.
FIG. 3 shows explanatory diagrams of allocation of non-guaranteed power in synchronous dual connectivity and asynchronous dual connectivity.
FIG. 4 shows explanatory diagrams of a ping-pong effect in dual connectivity.
FIG. 5 is an explanatory diagram of an example operation of a user terminal according to a first example.
FIG. 6 shows explanatory diagrams of a measurement control.
FIG. 7 is an explanatory diagram of an example operation of a user terminal according to a second example.
FIG. 8 is an illustrative diagram of a schematic configuration of a radio communication system of according to an illustrated embodiment.
FIG. 9 is an illustrative diagram of an overall configuration of a radio base station according to the illustrated embodiment.
FIG. 10 is an illustrative diagram of a functional configuration of the radio base station according to the illustrated embodiment.
FIG. 11 is an illustrative diagram of an overall configuration of a user terminal according to the illustrated embodiment.
FIG. 12 is an illustrative diagram of a functional configuration of the user terminal according to the illustrated embodiment.

### Description of Embodiments

An embodiment of the present invention will be described below in detail with reference to the accompanying drawings. In a LTE-A system, a HetNet (Heterogeneous Network), in which a small cell having a local coverage area of a radius of approximately several tens of meters is formed in a macro cell having a wide coverage area of a radius of approximately several kilometers, is under consideration (see, for example, non-patent literature 1). It is possible to apply carrier aggregation and dual connectivity to a HetNet configuration.

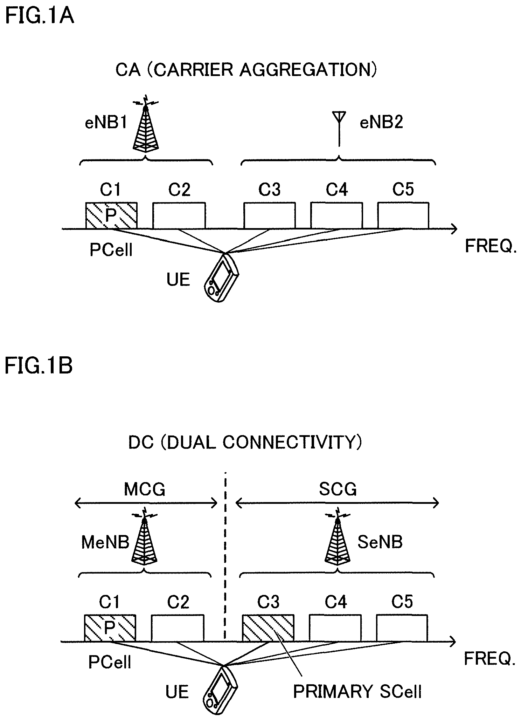

FIG. 1A illustrates carrier aggregation communication between radio communication base stations and a user terminal. In the example shown in FIG. 1A, a radio base station eNB1 is a radio base station that forms a macro cell (hereinafter, "macro base station"), and a radio base station eNB2 is a radio base station that forms a small cell (hereinafter, "small base station"). The small cell base station can, for example, have a configuration such as an RRH (remote radio head) connected to a macro base station.

In the case where carrier aggregation is applied, a single scheduler (e.g., a scheduler having the macro base station eNB1) controls the scheduling of a plurality of cells. In a configuration in which a scheduler having the macro base station eNB1 controls the scheduling of a plurality of cells, it is assumed that the radio base stations are connected to each other via an ideal backhaul such as, e.g., fiber optic high-speed cables.

FIG. 1B illustrates dual connectivity communication between radio communication base stations and a user terminal. In the case where dual connectivity is applied, a plurality of schedulers are independently provided, and the plurality of schedulers control the scheduling of one or more cells that the plurality of schedulers respectively have jurisdiction over. Specifically, a scheduler having a master base station (MeNB: master eNB) carries out the scheduling of a component carrier belonging to a master cell group (MCG). Furthermore, a scheduler having a secondary base station (SeNB: secondary eNB) carries out the scheduling of a component carrier belonging to a secondary cell group (SCG).

It is possible to apply LTE Rel. 10/11 carrier aggregation within a master cell group or within a secondary cell group. However, the total number of cells configuring the master cell group or the secondary cell group is to within a predetermined value (e.g., 5 cells).

In a configuration in which a scheduler having a master base station MeNB and a scheduler having a secondary base station SeNB control the scheduling of one or more cells in their respective jurisdictions, it is conceivable, for example, for the radio base stations to be connected to each other via a non-ideal backhaul such as an X2 interface, etc., having delay that cannot be ignored. Accordingly, it is assumed that a dynamic cooperative control that corresponds to the subframe length is impossible in the scheduling between the master cell group and the secondary cell group. Furthermore, in dual connectivity, two operations are possible: one case in which the master base station MeNB and the secondary base station SeNB are synchronized at a defined precision, and another case in which such synchronization has not been considered at all.

Dual connectivity has not been subject to the same 'tight' cooperative control between radio base stations like that for carrier aggregation. Accordingly, a user terminal performs downlink L1/L2 control (PDCCH/EPDCCH) and uplink L1/L2 control (UCI (Uplink Control Information) feedback via PUCCH/PUSCH) independently for each cell group.

A common search space, a PUCCH, and a PSCell (primary secondary cell) having the same functions as an always-activated primary cell (PCell) are configured in a secondary cell group.

In dual connectivity, the master base station MeNB and the secondary base station SeNB respectively perform scheduling independently. Therefore, it is difficult to perform a transmission power control, in which the transmission power is dynamically adjusted, within a range so that the total transmission power of the user terminal for the master base station MeNB and the secondary base station SeNB does not exceed the maximum allowable transmission power P_{CMAX}. If the necessary total transmission power exceeds the maximum allowable transmission power P_{CMAX} of the user terminal, the user terminal either scales down (power scaling) the power, or drops (power scaling) part or all of the channel or signal, until the necessary total transmission power no longer exceeds the maximum allowable transmission power P_{CMAX}.

In dual connectivity, the master base station MeNB and the secondary base station SeNB cannot discern what kind of power control is being performed by the other radio base station that constitutes a pair (the secondary base station SeNB for the master base station MeNB, and the master base station MeNB for the secondary base station SeNB). Therefore, there is risk of the user terminal not being able to discern the timing and frequency of the power scaling or dropping performed by the user terminal. If power scaling or dropping, which is not expected by the master base station MeNB and the secondary base station SeNB, is performed, the master base station MeNB and the secondary base station SeNB cannot correctly carry out uplink communication, thereby risking notable deterioration in communication quality and throughput.

Consequently, in dual connectivity, the concept of "minimum guaranteed power" per cell group is introduced for at least PUCCH/PUSCH transmission. P_{MeNB} designates the minimum guaranteed power of the master cell group (MCG), and P_{SeNB} designates the minimum guaranteed power of the secondary cell group (SCG). The master base station MeNB or the secondary base station SeNB notifies the user terminal of either both or one of the minimum guaranteed powers P_{MeNB} and P_{SeNB} via higher layer signaling such as RRC, etc. The user terminal can recognize both, or either, of the minimum guaranteed powers P_{MeNB} and P_{SeNB} as "0" if no particular signaling or instruction is given.

If the user terminal receives a transmission request from the master base station MeNB, namely, if PUCCH/PUSCH transmission is triggered by an uplink grant or RRC (Radio Resource Control), the transmission power to the master cell group (MCG) is calculated, and if the necessary transmission power (required power) is less than the minimum guaranteed power P_{MeNB}, the required power is determined as the transmission power of the master cell group (MCG).

If the user terminal receives a transmission request from the secondary base station SeNB, namely, if PUCCH/PUSCH transmission is triggered by an uplink grant or RRC (Radio Resource Control), the transmission power to the secondary cell group (SCG) is calculated, and if the necessary transmission power (required power) is less than the minimum guaranteed power P_{SeNB}, the required power is determined as the transmission power of the secondary cell group (MCG).

In other words, if the required power for a radio base station xeNB (the master base station MeNB or the secondary base station SeNB) is less than a minimum guaranteed power P_{xeNB} (minimum guaranteed power P_{MeNB} or P_{SeNB}), the user terminal does not carry out power scaling or dropping.

If the required power of the radio base station xeNB exceeds the minimum guaranteed power P_{xeNB}, the user terminal sometimes controls in accordance with a predetermined condition so that the transmission power becomes less than or equal to the minimum guaranteed power P_{xeNB}. Specifically, in the case where the there is a risk of the total required power of the master cell group and the secondary cell group exceeding the maximum allowable transmission power P_{CMAX} of the user terminal, the user terminal carries out power scaling and channel/signal dropping on the cell group that requires the power that exceeds the minimum guaranteed power P_{xeNB}. Consequently, once the transmission power becomes less than or equal to the minimum guaranteed power P_{xeNB}, the user terminal no longer carries out any further power scaling or channel/signal dropping.

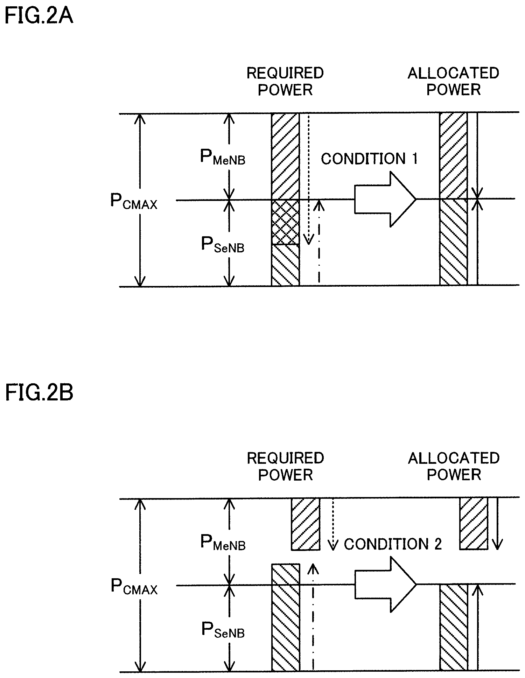

In the case of synchronous dual connectivity (see FIG. 2A), the total required power from the master base station and the secondary base station, at the same timing, exceeding the maximum allowable transmission power P_{CMAX} of the user terminal constitutes the condition by which the user terminal carries out power scaling or dropping. In such a case, the user terminal carries out power scaling or dropping on the cell group in which the transmission power exceeds the minimum guaranteed power P_{xeNB} therefor, and controls the total transmission power for the user terminal so as not to exceed the maximum allowable transmission power P_{CMAX} of the user terminal (condition 1).

In the case of asynchronous dual connectivity (see FIG. 2B), the risk of the required power in an overlapping section exceeding the maximum allowable transmission power P_{CMAX} of the user terminal constitutes the condition by which the user terminal carries out power scaling or dropping. In the case where the user terminal cannot discern whether the required power in the overlapping section does not exceed the maximum allowable transmission power P_{CMAX} of the user terminal, the user terminal allocates the transmission power of each cell group so as to each be less than the minimum guaranteed power P_{xeNB} (condition 2).

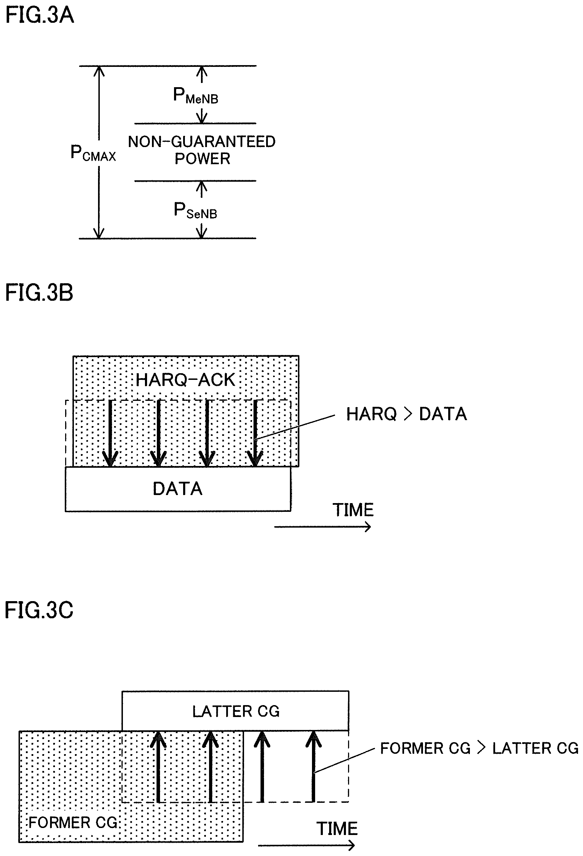

The minimum guaranteed powers P_{xeNB} can also be set so that all the set minimum guaranteed powers P_{xeNB} do not total to 100%. For example, the minimum guaranteed power P_{MeNB} of the master cell group can be set to 30%, and the minimum guaranteed power P_{SeNB} can be set to 30%. In such a case, a non-guaranteed power which is not guaranteed to be allocated for either radio base station xeNB is 40% (see FIG. 3A).

In the case of synchronous dual connectivity (see FIG. 3B), non-guaranteed power is preferentially distributed to a channel or control information having a higher priority, in accordance with priorities prescribed to each transmitted channel or control information. If there is insufficient power, power is not distributed to a channel or control information that has a lower priority. In the example shown in FIG. 3B, since the HARQ acknowledgement (HARQ-ACK: Hybrid Automatic Repeat reQuest-acknowledge) has a higher priority than data, power is preferentially distributed to the HARQ-ACK.

In the case of asynchronous dual connectivity (see FIG. 3C), non-guaranteed power is distributed while prioritizing the cell group (former cell group) which is already being subject to transmission. If there is insufficient power at a latter cell, power is distributed to within this cell group in accordance with priorities prescribed to each transmitted channel or control information within this cell group. In the example shown in FIG. 3C, since the former cell group to which power has already being located is prioritized, the latter cell group cannot take away the power that has been allocated to the former cell group.

As described above, the ideal transmission power control differs between synchronous dual connectivity and asynchronous dual connectivity. The transmission power control for synchronous dual connectivity is applied when the difference in transmission timing between cell groups is within a predetermined value (e.g., 33+α [µs], wherein [µs] designates the timing difference between cell groups, and α designates an additional timing difference that is added in an intra-terminal process, etc., for a receiving timing difference). The transmission power control for asynchronous dual connectivity is applied when of the transmission timing difference between cell groups exceeds the predetermined value (e.g., 33+α [µs]). Furthermore, the synchronous dual connectivity and the asynchronous dual connectivity can be called "DC mode 1" and "DC mode 2", respectively. Additionally, the transmission power control ideal for synchronous dual connectivity can be called "transmission power control for synchronous dual connectivity" or "DC power-control (PC) mode 1", and the transmission power control ideal for asynchronous dual connectivity can be called "transmission power control for asynchronous dual connectivity" or "DC power-control (PC) mode 2".

In transmission power control for synchronous dual connectivity, it is interpreted that the minimum guaranteed power P_{xeNB} is an electrical power that is preferentially allocated to the cell group (xCG). In transmission power control for asynchronous dual connectivity, it is interpreted that the minimum guaranteed power P_{xeNB} is an electrical power that is exclusively allocated to the cell group (xCG). For example, in the transmission power control for asynchronous dual connectivity, the minimum guaranteed power P_{MeNB} is an electrical power that is not allocated to the secondary cell group (SCG).

In transmission power control for synchronous dual connectivity, the non-guaranteed power is allocated in accordance with the order of priority of the channel and control information. The order of priority of the channel and control information can be prescribed as, e.g., HARQ-ACK or scheduling request signal (SR: scheduling request) > channel state information (CSI) > data > sounding reference signal (SRS). In the transmission power control for asynchronous dual connectivity, the non-guaranteed power is prioritized to the former cell group in the case where a former cell group exists during transmission to a latter cell group, so that the non-guaranteed power is not allocated to the partially overlapping latter cell group.

Hence, the transmission power control for synchronous dual connectivity and the transmission power control for asynchronous dual connectivity are prescribed in the above manner. However, a case exists where a conclusion cannot be reached as to which transmission power control to carry out.

For example, it is conceivable for a case in which although the master base station MeNB and the secondary base station SeNB are synchronous, the transmission timing difference between the cell groups at the user terminal exceeds the predetermined value (e.g., 33+α [µs]). This is a case in which the difference in the propagation channel from the radio base station xeNB to the user terminal is greater than expected for the master base station MeNB and the secondary base station SeNB. However, such a case cannot occur if the stations are correctly placed.

For example, it is conceivable for a case in which although the master base station MeNB and the secondary base station SeNB are asynchronous, the transmission timing difference between the cell groups at the user terminal is within the predetermined value (e.g., 33+α [µs]). This is a case in which the user terminal contingently transmits at a site at which the difference in receiving timing is extremely small. In this case, it is possible for the asynchronous dual connectivity to occur at a constant rate, and this cannot be resolved by station placement, etc., so long as the master base station MeNB and the secondary base station SeNB are asynchronous.

Whether the user terminal should autonomously switch between transmission power control for synchronous dual connectivity and transmission power control for asynchronous dual connectivity is considered depending on whether the transmission timing difference is within the predetermined value (e.g., 33+α [µs]) or not. In such a case, the radio base station xeNB cannot recognize which transmission power control the user terminal is operating. Accordingly, there is a possibility of transmission power control assumed at the radio base station xeNB side and the transmission power control assumed at the user terminal side not coinciding.

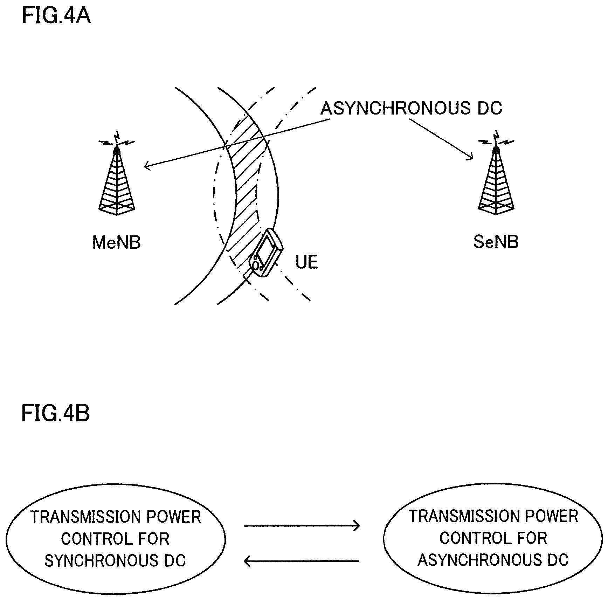

More specifically, in an asynchronous state between the master base station MeNB and the secondary base station SeNB, a case occurs in which the transmission timing difference between the cell groups at the user terminal is within the predetermined value (e.g., 33+α [µs]). This example is shown in FIG. 4A. In a user terminal in which the transmission or receiving timing difference is contingently in an extremely small region (the region shown by diagonal lines in FIG. 4A), sometimes the propagation channel changes and/or the distance to the radio base station xeNB changes in accordance with changes in movement or surroundings of the user terminal itself or due to environmental changes. In such a case, the user terminal applies a timing advance control of the radio base station xeNB or a timing adjustment control of the terminal itself, so that within a small timeframe the difference in transmission timing exceeds the predetermined value (e.g., 33+α [µs]), and thereafter becomes within the predetermined value (e.g., 33+α [µs]) (see FIG. 4A). In such a case, the user terminal switches between two transmission power controls (ping-pong effect), so that the battery of the user terminal is unnecessarily consumed (see FIG. 4B).

If a method is employed in which the radio base station xeNB commands the transmission power control that the user terminal is to be operated by, the above-described inconsistent recognition and ping-pong effect do not occur. For example, the master base station MeNB notifies the user terminal, which configures a dual connectivity, whether the master base station MeNB and the secondary base station SeNB are synchronized within the predetermined timing with respect to the user terminal or which transmission power control the user terminal should use, during the dual connectivity configuration or thereafter via RRC signaling or MAC signaling, etc. The user terminal switches, within a predetermined time, to the notified transmission power control upon detecting the aforementioned signaling. However, this method has a problem with signaling overlapping increasing.

Transmission power control for synchronous dual connectivity has a higher efficiency than that of transmission power control for asynchronous dual connectivity. Therefore, if the user terminal is operating the transmission power control for asynchronous dual connectivity, a problem arises with whether the radio base station xeNB recognizes or fails to recognize that the user terminal is operating the transmission power control for synchronous dual connectivity. Due to such an inconsistency in recognition, with respect to the power allocation of the radio base station xeNB, a case occurs in which the user terminal is not allocated necessary power, or a case in which the user terminal is not allocated power in the order of priority that is based on uplink control information (UCI) from the radio base station xeNB.

If the user terminal is operating the transmission power control for the synchronous dual connectivity, the problem of whether the radio base station xeNB recognizes or fails to recognize that the user terminal is operating the transmission power control for asynchronous dual connectivity does not arise. This is because the user terminal has the capability of allocating larger amounts of power with respect to the power allocation of the radio base station xeNB. Furthermore, this is also due to the radio base station xeNB expecting the transmission power control for asynchronous dual connectivity, and hence, does not expect the user terminal to have an efficient power control.

If the radio base station xeNB detects that the transmission power control for asynchronous dual connectivity is being operated, the radio base station xeNB carries out power allocation on the premise that the transmission power control for asynchronous dual connectivity is applied. At this instance, no particular problem occurs even if the user terminal applies the transmission power control for synchronous dual connectivity.

If the radio base station xeNB detects that the transmission power control for synchronous dual connectivity is being applied, since a transmission timing difference that exceeds the predetermined value (e.g., 33+α [µs]) is detected in the user terminal, the case where the transmission power control for asynchronous dual connectivity is applied is a case in which the propagation channel difference is extremely large, and a large deterioration in quality occurs also in the downlink communication quality, in addition to occurring the uplink power control.

Consequently, the inventors of the present invention have discovered a configuration that avoids an increase in signal overlapping while resolving problems such as the above-described inconsistency in recognition and the ping-pong effect.

### (First Example)

If a specified event occurs in the higher layer, the user terminal applies the transmission power control for synchronous dual connectivity or transmission power control for asynchronous dual connectivity based on a transmission timing difference detected in its own terminal until a subsequent event occurs. The specified event in the higher layer can be, for example, the configuring of the dual connectivity. The subsequent event can be, for example, the reconfiguring of the dual connectivity.

Based on the detected result at the time of the specified event, the user terminal does not switch to another transmission power control after deciding to apply either one of the transmission power control for synchronous dual connectivity and transmission power control for asynchronous dual connectivity.

Alternatively, based on the detected result at the time of the specified event, the user terminal can switch to another transmission power control only a predetermined number of times (e.g., once) after deciding to apply either one of the transmission power control for synchronous dual connectivity and transmission power control for asynchronous dual connectivity.

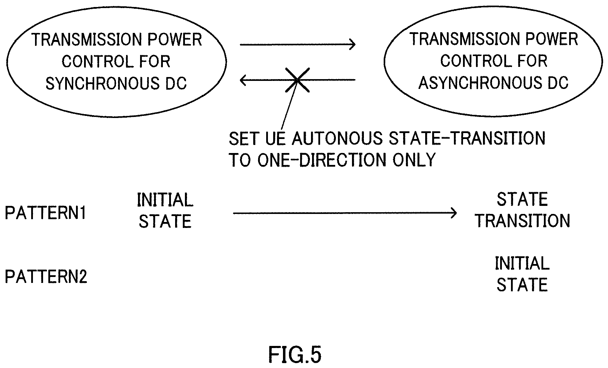

If the above-mentioned number of times is set to "once", the switching of the transmission power control of the user terminal can be set to switch in only one direction (see FIG. 5). In other words, a transition only occurs once at a maximum, thereby avoiding a ping-pong effect from occurring in the user terminal that is present at a boundary at which it is determined whether or not the above-mentioned predetermined conditions should be applied.

In the example shown in FIG. 5, the user terminal switches to the transmission power control for asynchronous dual connectivity if the detected transmission timing difference exceeds the predetermined value (e.g., 33+α [µs]) in a state where the transmission power control for synchronous dual connectivity is currently being applied (pattern 1).

In the example shown in FIG. 5, the user terminal does not switch to the transmission power control for synchronous dual connectivity even if the detected transmission timing difference is less than the predetermined value (e.g., 33+α [µs]) in a state where the transmission power control for asynchronous dual connectivity is currently being applied (pattern 2).

Accordingly, since only a maximum of one state transition occurs during the time the specified event occurs until the subsequent occurs in the higher layer, the ping-pong effect can be avoided without increasing the overhead via network signaling. Furthermore, since the user terminal that applies transmission power control for asynchronous dual connectivity does not need to decide whether or not to apply transmission power control for synchronous dual connectivity, battery consumption can be reduced.

The user terminal can configured to not switch to the transmission power control for synchronous dual connectivity so long as a change command is not received from the higher layer if the user terminal has already once applied transmission power control for asynchronous dual connectivity.

If synchronous dual connectivity is applied to the master base station MeNB and the secondary base station SeNB, the user terminal makes a transition from the transmission power control for synchronous dual connectivity to the transmission power control for asynchronous dual connectivity in the case where the transmission timing difference exceeds the predetermined value (e.g., 33+α [µs]). Since this indicates that an unexpected timing difference in the network, the transmission quality cannot be guaranteed. Such a case cannot occur if the stations are correctly placed, and there is a high possibility of the transmission quality worsening regardless of whether the transition to the transmission power control for asynchronous dual connectivity occurs.

If asynchronous dual connectivity is applied to the master base station MeNB and the secondary base station SeNB, it is possible for a case in which the user terminal applies the transmission power control for synchronous dual connectivity, however, since allocation is carried out at the radio base station xeNB while assuming that the transmission power control for asynchronous dual connectivity is being applied, no particular demerit such as inconsistent recognition occurs. If the user terminal makes a transition from the transmission power control for synchronous dual connectivity to the transmission power control for asynchronous dual connectivity, even if transition back to the transmission power control for synchronous dual connectivity is not possible, since the radio base station xeNB assumes that the transmission power control for asynchronous dual connectivity is being applied, no particular concern arises in this regard.

A procedure from the viewpoint of the terminal will be hereinafter discussed using the user terminal that carries out the operation shown in FIG. 5 as an example.

The operation shown in FIG. 5 is for a user terminal that is compatible with both asynchronous dual connectivity and synchronous dual connectivity. Accordingly, the user terminal transmits its terminal capability signaling, regarding whether its terminal is compatible with only synchronous dual connectivity or compatible with both asynchronous dual connectivity and synchronous dual connectivity, to the radio base station xeNB.

The radio base station xeNB configures dual connectivity with the user terminal. For example, RRC signaling is used as a dual connectivity configuration. In the case where, e.g., two or more cell groups are configured by RRC signaling from the radio base station xeNB, the user terminal detects the dual connectivity between the cell groups.

If a specified event (e.g., such as a configuring of dual connectivity) occurs in the higher layer, the user terminal detects whether or not the master base station MeNB and the secondary base station SeNB are a synchronous case. Such an observation operation can, for example, utilize a transmission timing difference between a serving cell of a master cell group that belongs to the master base station MeNB and a serving cell of a secondary cell group that belongs to the secondary base station SeNB. In such a case, the user terminal applies the transmission power control for synchronous dual connectivity or the transmission power control for asynchronous dual connectivity depending on whether or not the transmission timing difference between the serving cells of both cell groups exceeds a threshold value.

If the user terminal determines that the detected timing difference at the time of the specified event is within a predetermined threshold value (e.g., 33+α [µs]), the transmission power control for synchronous dual connectivity is applied. Thereafter, if the user terminal determines that the transmission timing difference has exceeded the predetermined value (e.g., 33+α [µs]), the user terminal switches to transmission power control for asynchronous dual connectivity.

If the user terminal determines that the detected timing difference at the time of the specified event exceeds a predetermined threshold value (e.g., 33+α [µs]), the transmission power control for asynchronous dual connectivity is applied. Thereafter, even if the user terminal determines that the transmission timing difference has become within the predetermined value (e.g., 33+α [µs]), the user terminal does not switch to transmission power control for asynchronous dual connectivity.

If a subsequent event (e.g., reconfiguring of the dual connectivity) occurs, the user terminal detects again the transmission timing difference of the master base station MeNB and the secondary base station SeNB. The user terminal applies the transmission power control for synchronous dual connectivity or the transmission power control for asynchronous dual connectivity depending on whether or not the detected transmission timing difference exceeds the threshold value.

The specified event in the higher layer that constitutes a trigger for the user terminal to detect is not limited to the configuring of the dual connectivity, and can include all or any one of: RRC parameter reconfiguration, PSCell change, SCell change, secondary cell group modification (SCG-modification), and SCell activation/deactiviation.

In the case where determination occurs in the downlink, the specified event can be a pathloss change parameter such as, e.g., a DL pathloss reference change.

In the case where determination occurs in the uplink, the specified event can be a RACH sequence in an SCell (sTAG: secondary timing advance group) of a secondary cell group. This may be limited to a predetermined SCell; for example, an SCell having the smallest or largest SCell index, the best downlink quality, the best CQI (Channel Quality Indicator), or an SCell to which a RACH sequence has recently been carried out.

The specified event may be the receiving of a timing advance (TA) command; in this case, this can also be limited to a specified TAG. The specified event may also be a "PDCCH order" in an SCell of the secondary cell group. The specified event may be the starting or restarting of a TA timer.

The specified event may also be the addition or modification (removal or addition) of a PCell.

In the case where the state of the user terminal at the higher layer detection changes due to any one of the above-mentioned events, the user terminal detects the transmission timing difference. The user terminal applies transmission power control for synchronous dual connectivity or the transmission power control for asynchronous dual connectivity depending on whether or not the detected transmission timing exceeds the predetermined value (e.g., 33+α [µs]).

For example, after the user terminal applies transmission power control for synchronous dual connectivity in accordance with the transmission timing difference that was detected at the time of the specified event, if the transmission timing difference exceeds the predetermined value (e.g., 33+α [µs]) during a period of time until another event occurs, the user terminal can switch to the transmission power control for asynchronous dual connectivity.

For example, after the user terminal applies transmission power control for asynchronous dual connectivity in accordance with the transmission timing difference that was detected at the time of the specified event, even if the transmission timing difference becomes within the predetermined value (e.g., 33+α [µs]) during a period of time until another event occurs, the user terminal can be configured so as not to switch to the transmission power control for synchronous dual connectivity.

For example, after the user terminal has already once switched to the transmission power control for asynchronous dual connectivity, the user terminal can be configured so as not to switch to the transmission power control for synchronous dual connectivity so long as another event does not occur even if the transmission timing difference changes.

The control pertaining to the first example can be applied in the case where different control operations are carried out between synchronous dual connectivity and asynchronous dual connectivity regardless of the transmission power control.

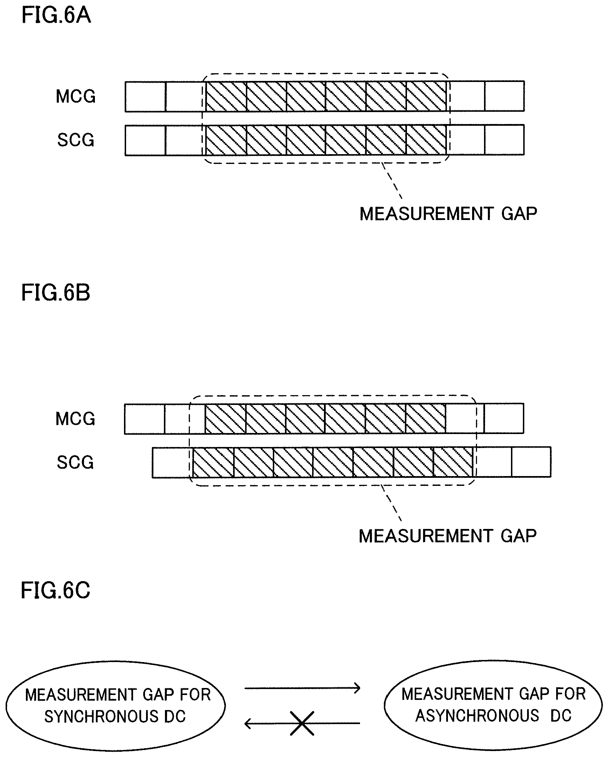

For example, in the case of synchronous dual connectivity, it is imperative for the measurement gap for the master cell group and the secondary cell group to be aligned (see FIG. 6A). The measurement gap indicates a section of the transmission that needs to be ended in order to carry out measurements. In the example shown in FIG. 6A, 6 subframe sections are respectively provided as a measurement gap.

In the case of asynchronous dual connectivity, the measurement gap for the master cell group and the secondary cell group may possibly be out of alignment (see FIG. 6B). In the example shown in FIG. 6B, 6 subframe sections are provided in the master cell group and 7 subframe sections are provided in the secondary cell group as a measurement gap.

In the above measurement control, after the user terminal applies the measurement gap pattern for synchronous dual connectivity in accordance with the transmission timing difference detected at the time of the specified event, the user terminal is allowed to switch once to the measurement gap pattern for asynchronous dual connectivity in accordance with the detected transmission timing difference (see FIG. 6C).

The user terminal can be configured so that, after the user terminal applies the measurement gap pattern for asynchronous dual connectivity in accordance with the transmission timing difference detected at the time of the specified event, the user terminal does not switch to the measurement gap pattern for synchronous dual connectivity even if a fluctuation in the transmission timing difference were to occur (see FIG. 6).

The user terminal can use any one or a combination of the below-described determination indicators for determining which control to operate, such as the transmission power control and the measurement gap pattern, etc., that are for synchronous dual connectivity and asynchronous dual connectivity.

The user terminal can use the uplink transmission timing difference of arbitrary serving cells belonging to respective cell groups as a determination indicator. For example, the user terminal can determine whether to apply either the control for synchronous dual connectivity or the control for asynchronous dual connectivity based on whether or not the uplink transmission timing difference between arbitrary cells is within the predetermined value (e.g., 33+α [µs]).

The user terminal can use the maximum uplink transmission timing difference of serving cells belonging to respective cell groups as a determination indicator. For example, the user terminal can determine whether to apply either the control for synchronous dual connectivity or the control for asynchronous dual connectivity based on whether or not the maximum uplink transmission timing difference between cells is within the predetermined value (e.g., 33+α [µs]).

The user terminal can use the minimum uplink transmission timing difference of serving cells belonging to respective cell groups as a determination indicator. For example, the user terminal can determine whether to apply either the control for synchronous dual connectivity or the control for asynchronous dual connectivity based on whether or not the minimum uplink transmission timing difference between cells is within the predetermined value (e.g., 33+α [µs]).

The user terminal can use the uplink transmission timing difference of a PCell belonging to a master cell group and a PSCell belonging to a secondary cell group as a determination indicator. For example, the user terminal can determine whether to apply either the control for synchronous dual connectivity or the control for asynchronous dual connectivity based on whether or not the transmission timing difference of the PCell belonging to the master cell group and the PSCell belonging to the secondary cell group is within the predetermined value (e.g., 33+α [µs]).

The user terminal can use the downlink receiving timing difference of arbitrary serving cells belonging to respective cell groups as a determination indicator. For example, the user terminal can determine whether to apply either the control for synchronous dual connectivity or the control for asynchronous dual connectivity based on whether or not the downlink transmission timing difference between arbitrary cells is within 33+α [µs].

The user terminal can use the maximum downlink receiving timing difference between serving cells belonging to respective cell groups as a determination indicator. For example, the user terminal can determine whether to apply either the control for synchronous dual connectivity or the control for asynchronous dual connectivity based on whether or not the maximum downlink transmission timing difference between cells is within 33+α [µs].

The user terminal can use the minimum downlink receiving timing difference between serving cells belonging to respective cell groups as a determination indicator. For example, the user terminal can determine whether to apply either the control for synchronous dual connectivity or the control for asynchronous dual connectivity based on whether or not the minimum downlink transmission timing difference between cells is within 33+α [µs].

The user terminal can use the downlink receiving timing difference of a PCell belonging to a master cell group and a PSCell belonging to a secondary cell group as a determination indicator. For example, the user terminal can determine whether to apply either the control for synchronous dual connectivity or the control for asynchronous dual connectivity based on whether or not the receiving timing difference of the PCell belonging to the master cell group and the PSCell belonging to the secondary cell group is within 33+α [µs].

As described above, if a predetermined event were to occur, such as, for example, configuring of dual connectivity, secondary cell group modification, RRC reconfiguration or SCell activation, etc., the user terminal determines synchronous dual connectivity or the asynchronous dual connectivity based on determining conditions such as receiving timing difference or transmission timing difference, etc.

In the case where the user terminal determines synchronous dual connectivity at the time of a predetermined event, the user terminal carries out the control for synchronous dual connectivity, such as, e.g., transmission power control or measurement control, etc. Thereafter, in the case where the determining conditions for synchronous dual connectivity deviate, the user terminal can switch to the control for asynchronous dual connectivity.

In the case where the user terminal determines asynchronous dual connectivity at the time of a predetermined event, the user terminal carries out the control for asynchronous dual connectivity. Thereafter, even if the determining conditions for asynchronous dual connectivity are deviated, the user terminal can be configured so as not switch to the control for synchronous dual connectivity so long as another predetermined event does not occur.

In the case where the user terminal applies the control for asynchronous dual connectivity once, the user terminal can continue to carry out the control for asynchronous dual connectivity so long as another predetermined event does not occur.

### (Second Example)

The control for the case where the user terminal is only compatible with synchronous dual connectivity will be described herein below.

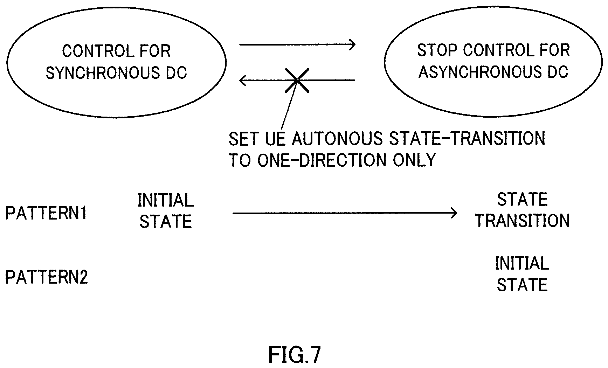

When a specified event occurs at the higher layer such as, e.g., configuring of synchronous dual connectivity, etc., the user terminal applies the control for synchronous dual connectivity during the time until a subsequent even occurs. The user terminal can switch between the control for synchronous dual connectivity and the ending of the control for synchronous dual connectivity. The ending of the control for synchronous dual connectivity can indicate, for example, the ending of uplink transmission of the secondary cell group. In such a case, by configuring the user terminal to autonomously carry out state transition only in one direction (see FIG. 7), a ping-pong effect can be avoided and battery consumption can be suppressed.

In the case where a detected transmission timing difference exceeds the predetermined value (e.g., 33+α [µs]) in a state where the user terminal is applying the control of synchronous dual connectivity, the user terminal ends the control for synchronous dual connectivity.

Once the control for synchronous dual connectivity has been ended, even if the detected transmission timing difference becomes within the predetermined value (e.g., 33+α [µs]), the user terminal does not start the control for synchronous dual connectivity so long as a subsequent event does not occur.

If a subsequent event occurs, the user terminal detects another transmission timing difference, and applies the control for synchronous dual connectivity if the detected transmission timing difference is within the predetermined value (e.g., 33+α [µs]), and does not start the control for synchronous dual connectivity if the detected transmission timing difference exceeds the predetermined value (e.g., 33+α [µs]).

If a user terminal that is only compatible with synchronous dual connectivity enters an asynchronous region, the user terminal can be configured to detect a radio link failure in the secondary cell group, a reconnection sequence can be started, a specific resource (a PUCCH or an SRS) of the PCell of the secondary cell group can be released, or the sTAG TA timers of the secondary cell group can be forced to expire or end.

### (Configuration of Radio Communication System)

The following description concerns the configuration of a radio communication system according to the present embodiment. In this radio communication system, a radio communication method is adopted to which the above-described control operations are applied.

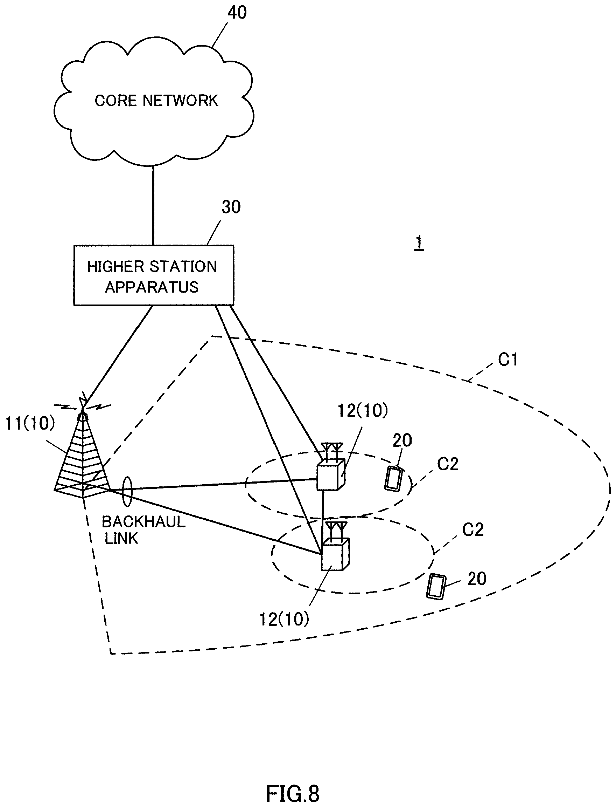

Fig. 8 is a diagram schematically illustrating the configuration of a radio communication system according to the present embodiment. As illustrated in Fig. 8, the radio communication system 1 includes a plurality of radio base stations 10 (11 and 12) and a plurality of user terminals 20 that are located within cells of the respective radio base stations 10 and are configured to be able to communicate with the radio base stations 10. Each of the radio base stations 10 is connected to a higher station apparatus 30 and is connected to a core network 40 via the higher station apparatus 30.

In Fig. 8, the radio base station 11 is configured as a macro base station having a relatively wide coverage and forms a macro cell C1. The radio base station 12 is configured as a small base station having a local coverage and forms a small cell C2. The numbers of the radio base stations 11 and 12 are not limited to those illustrated in Fig. 8.

In the macro cell C1 and the small cell C2, the same frequency band may be used or different frequency bands may be used. The radio base stations 11 and 12 are connected to each other via an inter-base-station interface (for example, optical fiber, or an X2 interface).

Dual connectivity (DC) or carrier aggregation (CA) may be applied between the radio base station 11 and the radio base station 12, or between the radio base station 11 and another radio base station 11, or between the radio base station 12 and another radio base station 12.

The user terminal 20 is a terminal supporting various communication schemes such as LTE and LTE-A, etc., and may include not only a mobile communication terminal, but also a stationary communication terminal. The user terminal 20 is able to carry out communication with another user terminal 20 via the radio base station 10.

The higher station apparatus 30 includes, but is not limited to, an access gateway apparatus, a radio network controller (RNC), a mobility management entity (MME), etc.

In the radio communication system 1, a downlink shared channel (PDSCH: Physical Downlink Shared Channel) that is shared by each user terminal 20, a downlink control channel (PDCCH: Physical Downlink Control Channel, EPDCCH: Enhanced Physical Downlink Control Channel), and a broadcast channel (PBCH), etc., are used as downlink channels. The PDSCH is used to transmit user data, higher layer control information and a predetermined SIB (System Information Block). A PDCCH and an EPDCCH are used to transmit downlink control information (DCI).

In the radio communication system 1, an uplink shared channel (PUSCH: Physical Uplink Shared Channel) that is shared by 10 each user terminal 20, and an uplink control channel (PUCCH: Physical Uplink Control Channel), etc., are used as uplink channels. The PUSCH is used to transmit user data and higher layer control information.

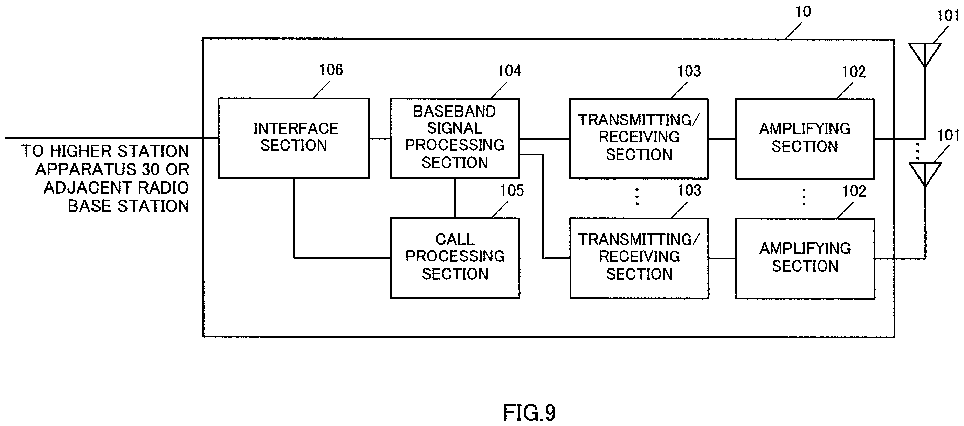

Fig. 9 is a diagram illustrating the entire configuration of the radio base station 10 according to the present embodiment. As illustrated in Fig. 9, the radio base station 10 has a plurality of transmission/reception antennas 101 for MIMO transmission, amplifying sections 102, transmitting/receiving sections 103, a baseband signal processing section 104, a call processing section 105 and an interface section 106.

User data transmitted from the radio base station 10 to a user terminal 20 via a downlink is input from the higher station apparatus 30 to the baseband signal processing section 104 via the interface section 106.

In the baseband signal processing section 104, signals are subjected to PDCP (Packet Data Convergence Protocol) layer processing, RLC (Radio Link Control) layer transmission processing such as division and concatenating of user data and RLC retransmission control transmission processing, MAC (Medium Access Control) retransmission control, including, for example, HARQ (Hybrid Automatic Repeat reQuest) transmission processing, scheduling, transport format selection, channel coding, inverse fast Fourier transform (IFFT) processing, and precoding processing, and are transferred to each transmitting/receiving section 103. Furthermore, in regard to downlink control signals, transmission processing is performed, including channel coding and inverse fast Fourier transform, and resultant signals are transferred to each transmitting/receiving section 103.

Each transmitting/receiving section 103 receives downlink signals that are precoded per antenna and output from the baseband signal processing section 104 and converts the signals into a radio frequency band. Each amplifying section 102 amplifies frequency-converted radio frequency signals, which are then transmitted from each transmission/reception antenna 101. Based on common recognition in the field of the art pertaining to the present invention, the transmitting/receiving section 103 can be applied to a transmitter/receiver, a transmitter/receiver circuit or a transmitter/receiver device.

Whereas, in regard to the uplink signals, radio frequency signals received by each transmission/reception antenna 101 are amplified by each amplifying section 102, subjected to frequency conversion in each transmitting/receiving section 103 and converted into baseband signals and the converted signals are then input to the baseband signal processing section 104.

The baseband signal processing section 104 performs FFT (Fast Fourier Transform) processing, IDFT (Inverse Discrete Fourier Transform) processing, error correction decoding, MAC retransmission control reception processing, and RLC layer and PDCP layer reception processing on user data included in the input uplink signals. The signals are then transferred to the higher station apparatus 30 via the interface section 106. The call processing section 105 performs call processing such as setting up and releasing a communication channel, manages the state of the radio base station 10, and manages the radio resources.

The interface section 106 performs transmission and reception of signals (backhaul signaling) with a neighbor radio base station via an inter-base-station interface (for example, optical fiber, X2 interface). Alternatively, the interface section 106 performs transmission and reception of signals with the higher station apparatus 30 via a predetermined interface.

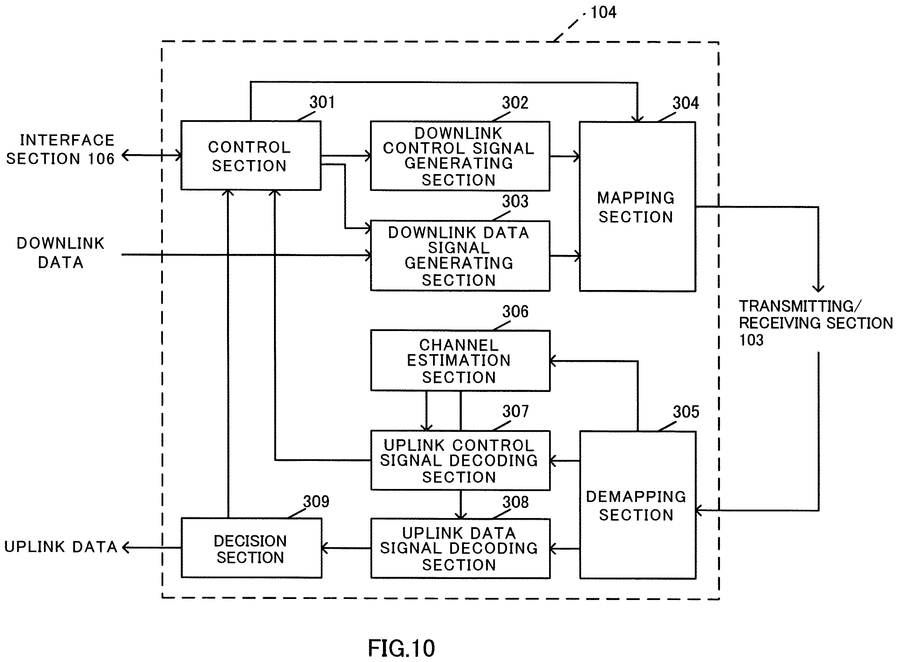

Fig. 10 is a diagram illustrating main functional structures of the baseband signal processing section 104 provided in the radio base station 10 according to the present embodiment. As illustrated in Fig. 10, the baseband signal processing section 104 provided in the radio base station 10 is configured to include at least a control section 301, a downlink control signal generating section 302, a downlink data signal generating section 303, a mapping section 304, a demapping section 305, a channel estimation section 306, an uplink control signal decoding section 307, an uplink data signal decoding section 308, and a decision section 309.

The control section 301 controls scheduling of downlink user data to be transmitted on PDSCH downlink reference signals, downlink control information to be transmitted on either or both of PDCCH and enhanced PDCCH (EPDCCH), and downlink reference signals, etc. Furthermore, the control section 301 also performs control of scheduling (allocation control) of RA preamble to be transmitted on PRACH, uplink data to be transmitted on PUSCH, uplink control information and uplink reference signals to be transmitted on PUCCH or PUSCH. Information about allocation of uplink signals (uplink control signals and uplink user data) is transmitted to the user terminal 20 using downlink control signals (DCI).

The control section 301 controls allocation of radio resources to downlink signals and uplink signals based on feedback information from each user terminal 20 and instruction information from the higher station apparatus 30. In other words, the control section 301 serves as a scheduler. Based on common recognition in the field of the art pertaining to the present invention, the control section 301 can be applied to a controller, a control circuit or a control device.

The downlink control signal generating section 302 generates downlink control signals (both or either of PDCCH signals and EPDCCH signals) that have been allocated by the control section 301. Specifically, the downlink control signal generating section 302 generates a downlink assignment to notify the user terminal of allocation of downlink signals, and an uplink grant to notify the user terminal of allocation of uplink signals based on instructions from the control section 301. Based on common recognition in the field of the art pertaining to the present invention, the downlink control signal generating section 302 can be applied to a signal generator or a signal generating circuit.

The downlink data signal generating section 303 generates downlink data signals (PDSCH signals), the allocation thereof to the resources having been determined by the control section 301. The data signals generated in the downlink data signal generating section 303 are subjected to a coding process and a modulation process, using coding rates and modulation schemes that are determined based on CSI, etc., from each user terminal 20.

The mapping section 304 controls the allocation of the downlink control signals generated in the downlink control signal generating section 302 and the downlink data signals generated in the downlink data signal generating section 303 to radio resources based on commands from the control section 301. Based on common recognition in the field of the art pertaining to the present invention, the mapping section 304 can be applied to a mapping circuit and a mapper.

The demapping section 305 demaps uplink signals transmitted from the user terminal 20 and separates the uplink signals. The channel estimation section 306 estimates channel states from the reference signals included in the received signals separated in the demapping section 305, and outputs the estimated channel states to the uplink control signal decoding section 307 and the uplink data signal decoding section 308.

The uplink control signal decoding section 307 decodes the feedback signals (delivery acknowledgement signals, etc.) transmitted from the user terminal in the uplink control channel (PRACH, PUCCH), and outputs the results to the control section 301. The uplink data signal decoding section 308 decodes the uplink data signals transmitted from the user terminals through an uplink shared channel (PUSCH), and outputs the results to the decision section 309. The decision section 309 makes retransmission control decisions (A/N decisions) based on the decoding results in the uplink data signal decoding section 308, and outputs results to the control section 301.

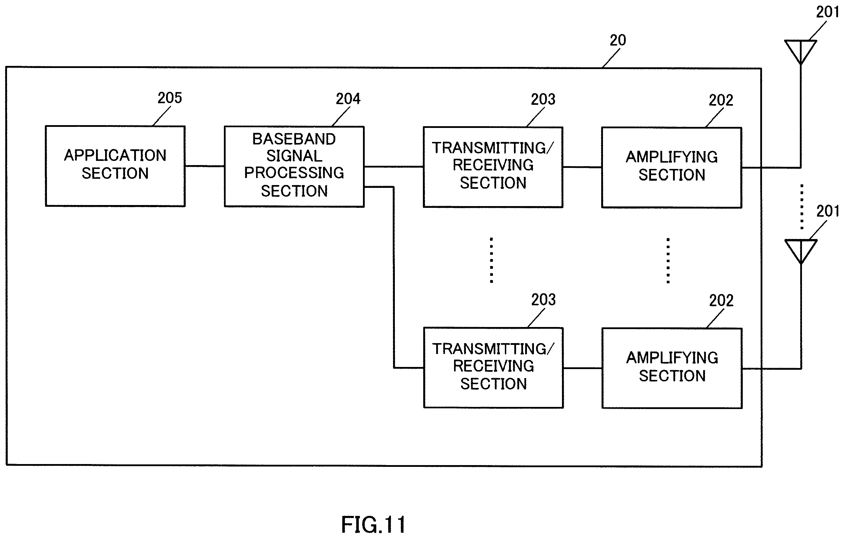

FIG. 11 is a diagram to show an overall structure of a user terminal 20 according to the present embodiment. As shown in FIG. 11, the user terminal 20 has a plurality of transmitting/receiving antennas 201 for MIMO communication, amplifying sections 202, transmitting/receiving sections (transmitting sections and receiving sections) 203, a baseband signal processing section 204 and an application section 205.

In regard to downlink data, radio frequency signals that are received in the plurality of transmitting/receiving antennas 201 are each amplified in the amplifying sections 202, and subjected to frequency conversion and converted into the baseband signal in the transmitting/receiving sections 203. This baseband signal is subjected to an FFT process, error correction decoding, a retransmission control receiving process, etc., in the baseband signal processing section 204. Out of this downlink data, downlink user data is forwarded to the application section 205. The application section 205 performs processes related to higher layers above the physical layer and the MAC layer. Furthermore, out of the downlink data, broadcast information is also forwarded to the application section 205. Based on common recognition in the field of the art pertaining to the present invention, the transmitting/receiving section 203 can be applied to a transmitter/receiver, a transmitting/receiving circuit or a transmitting/receiving device.

On the other hand, uplink user data is input from the application section 205 to the baseband signal processing section 204. In the baseband signal processing section 204, a retransmission control (HARQ) transmission process, channel coding, precoding, a discrete fourier transform (DFT) process, an inverse fast fourier transform (IFFT) process, etc., are performed, and the result is forwarded to each transmitting/receiving section 203. The baseband signal that is output from the baseband signal processing section 204 is converted into a radio frequency band in the transmitting/receiving sections 203. Thereafter, the amplifying sections 202 amplify the radio frequency signal having been subjected to frequency conversion, and transmit the resulting signal from the transmitting/receiving antennas 201.

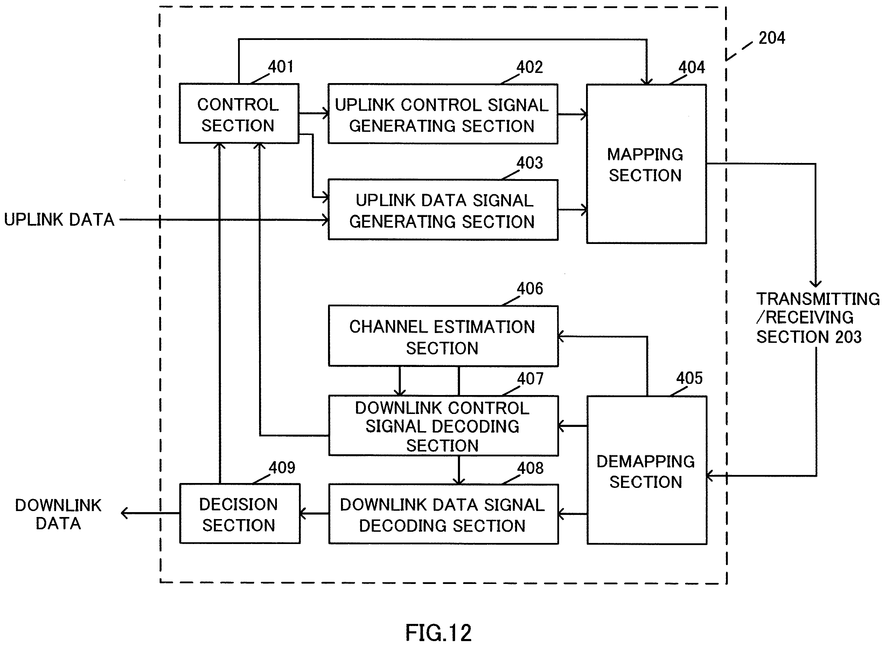

FIG. 12 is a diagram showing the main functional structure of the baseband signal processing section 204 provided in the user terminal 20. As shown in FIG. 12, the baseband signal processing section 204 provided in the user terminal 20 includes at least of a control section 401, an uplink control signal generating section 402, an uplink data signal generating section 403, a mapping section 404, a demapping section 405, a channel estimation section 406, a downlink control signal decoding section 407, a downlink data signal decoding section 408 and a decision section 409.

The control section 401 controls the generation of uplink control signals (A/N signals, etc.) and uplink data signals based on downlink control signals (PDCCH signals) transmitted from the radio base station 10, and retransmission control decisions in response to the PDSCH signals received. The downlink control signals received from the radio base station are output from the downlink control signal decoding section 407, and the retransmission control decisions are output from the decision section 409. Based on common recognition in the field of the art pertaining to the present invention, the control section 401 can be applied to a controller, a control circuit or a control device.

Based on an indicator that indicates when an event occurs in the higher layer, if the indicator changes in a state where either of the control for synchronous dual connectivity and the control for asynchronous dual connectivity is being operated, the control section 401 either performs a control that does not allow the switching to another dual connectivity control, or performs a control that switches to another dual connectivity control only a predetermined number of times.

The uplink control signal generating section 402 generates uplink control signals (feedback signals such as delivery acknowledgement signals, channel state information (CSI), etc.) based on commands from the control section 401. The uplink data signal generating section 403 generates uplink data signals based on commands from the control section 401. Note that, when an uplink grant is contained in a downlink control signal reported from the radio base station, the control section 401 commands the uplink data signal generating section 403 to generate an uplink data signal. Based on common recognition in the field of the art pertaining to the present invention, the uplink control signal generating section 402 can be applied to a signal generator or a signal generation circuit.

The mapping section 404 controls the allocation of the uplink control signals (delivery acknowledgment signals, etc.) and the uplink data signals to radio resources (PUCCH, PUSCH) based on commands from the control section 401.

The demapping section 405 demaps downlink signals transmitted from the radio base station 10 and separates the downlink signals. The channel estimation section 406 estimates channel states from the reference signals included in the received signals separated in the demapping section 406, and outputs the estimated channel states to the downlink control signal decoding section 407 and the downlink data signal decoding section 408.

The downlink control signal decoding section 407 decodes the downlink control signals (PDCCH signals) transmitted in the downlink control channel (PDCCH), and outputs the scheduling information (information regarding the allocation to uplink resources) to the control section 401. In addition, if information related to the cells for feeding back delivery acknowledgment signals and information as to whether or not RF tuning is applied are included in downlink control signals, these pieces of information are also output to the control section 401.

The downlink data signal decoding section 408 decodes the downlink data signals transmitted in the downlink shared channel (PDSCH), and outputs the results to the decision section 409. The decision section 409 makes retransmission control decisions (A/N decisions) based on the decoding results in the downlink data signal decoding section 408, and outputs the results to the control section 401.

The present invention is by no means limited to the above embodiment and can be implemented in various modifications. The sizes and shapes illustrated in the accompanying drawings in relationship to the above embodiment are by no means limiting, and may be changed as appropriate within the scope of optimizing the effects of the present invention. Besides, implementations with various appropriate changes may be possible without departing from the scope of the object of the present invention.

The disclosure of Japanese Patent Application No. 2014-195694, filed on September 25, 2014, is incorporated herein by reference in its entirety.

## Claims

1. A user terminal which communicates with a plurality of cell groups, respectively including one or more cells which utilize different frequencies, the user terminal comprising:
a control section, wherein, based on an indicator that indicates when an event occurs in a higher layer, if the indicator changes in a state where either of a control for synchronous dual connectivity and a control for asynchronous dual connectivity is being applied, the control section performs one of:
a control that does not allow the switching to another dual connectivity control, and
a control that switches to another dual connectivity control only a predetermined number of times.

2. The user terminal according to claim 1, wherein the control section performs one of:
a control that does not allow the switching to the control for synchronous dual connectivity, in the case where the indicator changes in a state where the control for asynchronous dual connectivity is being applied, and
a control that switches to the control for asynchronous dual connectivity, in the case where the indicator changes in a state where the control for synchronous dual connectivity is being applied.

3. The user terminal according to claim 2, wherein after switching from a state in which the control for synchronous dual connectivity is applied to the control for asynchronous dual connectivity, the control section is configured not to switch to the control for synchronous dual connectivity even if the indicator changes again.

4. The user terminal according to claim 2, wherein in the case where the control for asynchronous dual connectivity is being applied, the control section is configured not to switch to the control for synchronous dual connectivity so long as another event does not occur.

5. The user terminal according to any one of claims 1 through 4, wherein the event comprises at least one of configuring or reconfiguring a dual connectivity, RRC parameter reconfiguration, PSCell change, SCell change, secondary cell group modification, and SCell activation or deactiviation.

6. The user terminal according to claim 1, wherein the indicator comprises an uplink transmission timing difference of arbitrary serving cells belonging to respective cell groups.

7. The user terminal according to claim 1, wherein the indicator comprises a downlink receiving timing difference of arbitrary serving cells belonging to respective cell groups.

8. The user terminal according to claim 1, wherein the control for synchronous dual connectivity comprises one of a transmission power control and a measurement control.

9. A radio communication system in which a radio base station communicates with a user terminal and forms cell groups including one or more cells which utilize different frequencies, and applies dual connectivity with another radio base station, which forms different cell groups to said cell groups, wherein the user terminal comprises:
a control section, wherein, based on an indicator that indicates when an event occurs in a higher layer, if the indicator changes in a state where either of a control for synchronous dual connectivity and a control for asynchronous dual connectivity is being applied, the control section performs one of:
a control that does not allow the switching to another dual connectivity control, and
a control that switches to another dual connectivity control only a predetermined number of times.

10. A radio communication method for a user terminal which communicates with a plurality of cell groups, respectively including one or more cells which utilize different frequencies, the radio communication method comprising, based on an indicator that indicates when an event occurs in a higher layer, if the indicator changes in a state where either of a control for synchronous dual connectivity and a control for asynchronous dual connectivity is being applied, performing one of:
a control that does not allow the switching to another dual connectivity control, and
a control that switches to another dual connectivity control only a predetermined number of times.
